(19) Europäisches Patentamt
European Patent Office
Office européen des brevets

(11) Publication number: 0 316 627
A2

(12) # EUROPEAN PATENT APPLICATION

(21) Application number: 88117817.2

(51) Int. Cl.[4]: C08G 63/64 , C08J 5/18

(22) Date of filing: 26.10.88

(30) Priority: 16.11.87 US 121254

(43) Date of publication of application:
24.05.89 Bulletin 89/21

(84) Designated Contracting States:
DE FR GB IT NL

(71) Applicant: GENERAL ELECTRIC COMPANY
1 River Road
Schenectady New York 12305(US)

(72) Inventor: Rosenquist, Niles Richard
4955 Lakeside Court
Evansville Indiana 47712(US)

(74) Representative: Catherine, Alain
General Electric France Service de Propriété
Industrielle 18 Rue Horace Vernet B.P. 76
F-92134 Issy-les-Moulineaux Cédex(FR)

(54) **Solvent castable copolyestercarbonate resins of improved optical properties.**

(57) Solvent cast films exhibiting improved haze are comprised of a carbonate polymer containing the polymerization reaction products of

(i) a dihydric phenol;

(ii) a carbonate precursor; and

(iii) an amount effective to improve the haze of said films of at least one ester precursor which is a 1,4-cyclohexane dicarboxylic acid.

EP 0 316 627 A2

# SOLVENT CASTABLE COPOLYESTER-CARBONATE RESINS OF IMPROVED OPTICAL PROPERTIES

## BACKGROUND OF THE INVENTION

### Field of the Invention

The invention relates to copolyester-carbonate resins and their use as solvent-castable resins.

### Brief Description of the Prior Act

Polycarbonates are well know thermoplastic resin materials which, due to their many advantageous properties, find use as thermoplastic engineering materials. The resins exhibit, for example, excellent properties of toughness, flexibility, and relatively high heat distortion temperatures.

However, relatively thin conventional polycarbonate and copolyester-carbonate resin films, particularly those prepared by the solvent casting process, exhibit less than ideal optical properties. More particularly, solvent cast films comprised of conventional polycarbonate or copolyester-carbonate resins may exhibit a degree of haze which renders them useless in certain applications where optical clarity is critical.

Representative of the state of the art relative to improving optical properties in polycarbonate resins is the description in U.S. Patent 4,587,326.

The resins of the instant invention may be used to cast films exhibiting improved optical properties, particularly reduced haze. The films also exhibit an improved stability when exposed to ultra-violet light (in comparison to copolyester-carbonate prepared from aromatic dicarboxylic acids) and no significant loss of heat resistance (in comparison to copolyester-carbonate prepared from certain aliphatic dicarboxylic acids).

## SUMMARY OF THE INVENTION

The invention comprises a copolyester-carbonate resin prepared by the polymerization reaction of (i) at least one dihydric phenol, (ii) a carbonate precursor, and (iii) a dicarboxylic acid of the formula:

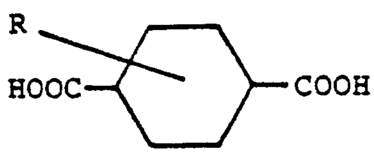

(I)

wherein R represents one of hydrogen or hydrocarbyl.

The term "hydrocarbyl" as used herein means the monovalent moiety obtained by removal of one hydrogen atom from a parent hydrocarbon, such as lower alkyl (alkyl of 1 to 4 carbon atoms).

The resins of the invention have a reduced crystallinity.

The invention also comprises solvent cast films of the resins of the invention and the method of their preparation.

The copolyester-carbonate resins of the invention may be formed into thin films, particularly those formed via the solvent casting process. The films exhibit improved optical properties, particularly reduced haze, as compared with films comprised of conventional polycarbonates.

## DETAILED DESCRIPTION OF THE PREFERRED EMBODIMENTS OF THE INVENTION

Methods of preparing copolyester-carbonate polymers are well known and comprise the polymerization reaction of a dihydric phenol, a carbonate precursor and an ester-bond precursor; see for example the

descriptions given in U.S. Patents 3,169,121 and 4,487,896; both incorporated herein by reference.

The dihydric phenols employed in the preparation of the copolyester-carbonate polymers of the invention may be represented by the general formula:-

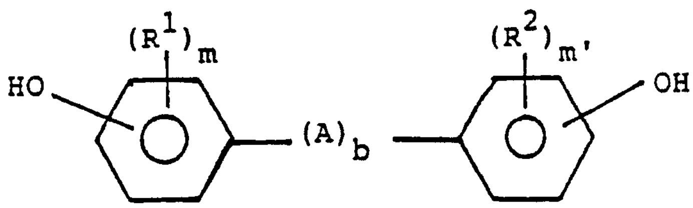

(II)

wherein:

$R^1$ and $R^2$ are independently selected from halogen, monovalent hydrocarbon, and monovalent hydrocarbonoxy radicals;

A is selected from the group consisting of divalent hydrocarbon radicals containing from 1 to about 15 carbon atoms; a halogen substituted divalent hydrocarbon radical containing from 1 to about 15 carbon atoms and divalent groups of the formulae:-

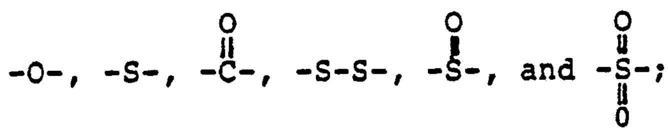

m and m′ are independently selected from positive integers having a value of from 0 to 4 inclusive; and b is either zero or one.

the monovalent hydrocarbon radicals represented by $R^1$ and $R^2$ include alkyl, cycloalkyl, aryl, aralkyl, and alkaryl radicals.

Preferred alkyl radicals are those containing from 1 to about 10 carbon atoms. Preferred cycloalkyl radicals are those containing from 4 to about 8 ring carbon atoms. Preferred aryl radicals are those containing from 6 to 12 ring carbon atoms, i.e., phenyl, naphthyl and biphenyl. Preferred aralkyl and alkaryl radicals are those containing from 7 to about 14 carbon atoms.

The monovalent hydrocarbonoxy radicals represented by $R^1$ and $R^2$ have the general formula: $-OR^3$ wherein $R^3$ is a monovalent hydrocarbon radical of the type described hereinbefore for $R^1$ and $R^2$.

Preferred halogen radicals are chlorine and bromine.

The divalent hydrocarbon radicals represented by A include alkylene, alkylidene, cycloalkylene, and cycloalkylidene radicals. The preferred alkylene radicals are those containing from 2 to about 20 carbon atoms. The preferred alkylidene radicals are those containing from 1 to about 20 carbon atoms. The preferred cycloalkylene and cycloalkylidene radicals are those containing from 4 to about 16 ring carbon atoms.

Some illustrative non-limiting examples of dihydric phenols falling within the scope of the Formula II include:

2,2-bis(4-hydroxyphenyl)propane (bisphenol-A);
1,1-bis(4-hydroxyphenyl)propane;
1,5-bis(4-hydroxyphenyl)pentane;
1,1-bis(4-hydroxyphenyl)decane;
2,2-bis(3,5-dimethyl-4-hydroxyphenyl)propane;
2,2-bis(3,5-dibromo-4-hydroxyphenyl)propane;
1,1-bis(4-hydroxyphenyl)cyclohexane;
1,1-bis(3,5-dimethyl-4-hydroxyphenyl)cyclohexane;
1,1-bis(3-methyl-5-chloro-4-hydroxyphenyl)cyclohexane;
1,3-bis(4-hydroxyphenyl)propane;
bis(4-hydroxyphenyl)ether;
p,p′-dihydroxydiphenyl;
4,4′-thiodiphenol; and
bis(3,5-diisopropyl-4-hydroxyphenyl)sulfone.

Other dihydric phenols are disclosed in U.S. Patent Nos. 3,169,121, 2,999,835, 3,027,365, 3,334,154, 3,035,021, 3,036,036, 3,036,037, 3,036,038, 3,036,039 and 4,111,910, all of which are incorporated herein

by reference.

It is, of course, possible to employ a mixture of two or more different dihydric phenols as well as individual dihydric phenols in the preparation of the instant polymers.

The preferred dihydric phenols are the 4,4′-bisphenols such as, for example, bisphenol-A.

The carbonate precursor may be a carbonyl halide, a carbonate ester, or a bishaloformate. The carbonyl halides which may be employed herein are carbonyl bromide, carbonyl chloride, and mixtures thereof. Typical carbonate esters which may be used are the diaryl carbonates such as diphenyl carbonate; di(halophenyl) carbonates such as di(chlorophenyl)carbonate, di(bromophenyl) carbonate and di-(trichlorophenyl) carbonate; di(alkylphenyl)carbonates such as di(tolyl)carbonate; phenyl tolyl carbonate; chlorophenyl chloronaphthyl carbonate; or mixtures thereof.

The bishaloformates suitable for use herein include the bishaloformates of dihydric phenols such as the bischloroformate of hydroquinone, bischloroformate of bisphenol-A, and the like; or bishaloformates of glycols such as the bischloroformates of ethylene glycol, polyethylene glycol, neopentyl glycol, and the like. The preferred carbonate precursor is carbonyl chloride, also know as phosgene.

The ester precursor, i.e., a compound of the Formula (I) given above includes
3-methylcyclohexane-1,4-dicarboxylic acid,
2-ethylcyclohexane-1,4-dicarboxylic acid and, preferably, cyclohexane-1,4-dicarboxylic acid, both the cis and trans isomeric forms. These compounds of the Formula (I) are all well known as is the method of their preparation.

A particularly useful method for preparing the copolyester-carbonate polymers of the invention is the interfacial polymerization process utilizing, as the reactants, the aforedescribed dihydric phenols, carbonate precursor, and the ester precursor, and also utilizing an aqueous caustic solution, a water immiscible organic solvent such as methylene chloride, a catalyst, and a molecular weight regulator; see for example the procedural details described in the U.S. Patent 3,169,121 among others available in the literature.

The catalysts which may be employed are any of the well known catalysts which catalyze the carbonate polymer forming reaction. These catalysts include, but are not limited to, tertiary amines such as triethylamine, tripropylamine, N,N-dimethylaniline, quaternary phosphonium compounds, and quaternary ammonium compounds.

The molecular weight regulators are any of the known compounds that regulate the molecular weight of the polymer by a chain terminating mechanism. These compounds include, but are not limited to, phenol, p-cumylphenol, tertiarybutyl phenol, and chroman-I.

The amount of the ester precursor of Formula (I) used in the preparation of the copolyester-carbonate polymers is an optical property improving amount. By optical property improving amount is meant an amount which is effective to improve the optical properties of the solvent cast films, i.e., effective to reduce the haze of said films. Generally this amount is from about 1 to about 15 mole percent, preferably from about 2 to about 10 mole percent, and more preferably from about 3 to about 10 mole percent. Mole percent of the ester precursor is based on the total amounts of dihydric phenol utilized in the preparation of the copolyester-carbonate polymer.

Generally, if less than about one mole percent of said ester precursor is used there is no significant improvement in the optical properties of the film. If more than about 15 mole percent of said ester precursor (I) is used the polymer begins to lose the advantageous properties exhibited by polycarbonate resins.

The high molecular weight, thermoplastic copolyester-carbonate polymers contain recurring carbonate groups, carboxylate groups, and carbocyclic groups in the polymer chain in which at least some of carbonate groups and at least some of the carboxylate groups are bonded directly to the ring carbon atoms of the carbocyclic groups.

The copolyester-carbonate polymers of the invention contain ester bonds and carbonate bonds in the polymer chain wherein the amount of the ester bonds is in the range of from about 1 to about 20 mole percent, preferably from about 2 to about 15 mole percent. For example, 5 moles of bisphenol-A reacting completely with 0.5 mole of cyclohexane-1,4-dicarboxylic acid and 4.5 mole of phosgene would give a copolyester-carbonate polymer of 10 mole percent ester bonds.

The copolyester-carbonate polymers of the invention contain at least the following two recurring structural units:

III. 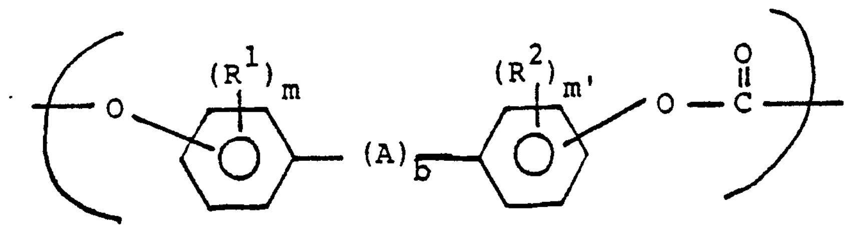 , and

IV. 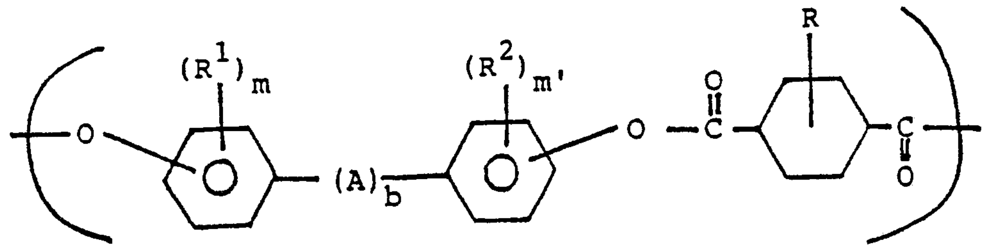

wherein R, $R^1$, $R^2$, A, m, m′, and b are as defined above and hereinafter.

Units (IV) are present in amounts of from about 1 to about 15 mole percent, based on the total amounts of units (III) and (IV) present, depending on the amounts of the ester precursor used.

The high molecular weight thermoplastic copolyester-carbonate polymers of the invention generally have an intrinsic viscosity, as measured in methylene chloride at 25° C, of at least about 0.5 dl/g, preferably at least about 0.6 dl/g, and generally less than about 1.6.

Also included within the scope of the instant invention are the randomly branched thermoplastic copolyester-carbonate polymers. These polymers are derived from (i) at least one dihydric phenol, (ii) a carbonate precursor, (iii) an ester precursor of the Formula (I) given above, and (iv) a minor amount of a branching agent. The branching agents are well known compounds and are generally aromatic compounds containing at least three functional groups which may be hydroxyl, carboxyl, carboxylic anhydride, haloformyl, or mixtures thereof. Some illustrative non-limiting examples of these polyfunctional aromatic compounds include trimellitic anhydride, trimellitic acid, trimellityl trichloride, 4-chloroformyl phthalic anhydride, pyromellitic acid, mellitic acid, mellitic anhydride, trimesic acid, benzophenone tetracarboxylic acid, and the like.

Also included herein are blends of the polymers of the invention with linear and branched carbonate polymers.

The copolyester-carbonate polymers of the invention may optionally have admixed therewith the commonly known and used additives such as, for example, antioxidants; ultraviolet radiation absorbers such as the cyanoacrylates, benzophenones, and benzotriazoles; hydrolytic stabilizers such as the epoxides disclosed in U.S. Patent Nos. 3, 489,716, 3,138,379, and 3,839,247, all of which are hereby incorporated herein by reference; color stabilizers such as the organophosphites disclosed in U.S. Patent Nos. 3,305,520 and 4,118,370, both of which are incorporated herein by reference; and flame retardants.

The solvent cast films of the instant invention may be prepared by the conventional and well know solvent casting process which comprises dissolving the carbonate polymer in an organic solvent such as, for example, methylene chloride, pouring the solution into a template, and evaporating the solvent to form the film. These films generally have a thickness of from about 0.5 to about 25 mils, preferably from about 1 to about 15 mils.

The following examples and preparations describe the manner and process of making and using the invention and set forth the best mode contemplated by the inventor of carrying out the invention but are not to be construed as limiting the invention. Where reported, the following tests were carried out.

<u>Haze</u>

A solvent cast film is prepared from resins of the invention by dissolving 5 g of the resin in 95 g of methylene chloride and pouring the solution into a 12.7 cm x 25.4 cm stainless steel template resting on a glass plate. An inverted glass dish is loosely placed over the glass plate and the solvent is gradually evaporated.

Samples for % haze determination are cut from the center of the film. The % haze values are determined on a Gardner Pivotable-Sphere Hazemeter (Model HG-1204).

Glass Transition Temperature (Tg)

The glass transition temperatures were determined by using a Perkin-Elmer DSC-2B instrument which measures the glass transition temperature or Tg by differential scanning calorimetry.

Intrinsic Viscosity (I.V.)

The intrinsic viscosity was measured at a temperature of 25° C in methylene chloride and is reported in deciliters/gram (dl/g).

EXAMPLE I

This example is not an example of the invention but is made for comparative purposes and illustrates a solvent cast film prepared from bisphenol-A polycarbonate resin.

A 1000 ml four neck flask is fitted with a mechanical stirrer, a pH probe, aqueous caustic inlet tube and Claisen adapter to which is attached a dry ice condenser and a gas inlet tube. To the flask are added 300 ml water, 450 ml methylene chloride, 0.7 ml triethylamine (0.005 mole), 57 g (0.25 mole) bisphenol-A, and 0.24 g (0.0016 mole) 4-tertiarybutyl phenol. With stirring the pH is raised to 10 by the addition of 25% aqueous sodium hydroxide. Phosgene is introduced into the flask at a rate of 1 g/min for 30 minutes (0.3 mole) with the pH maintained at 10-11 by the use of said aqueous sodium hydroxide solution. The resin layer is separated from the brine layer, washed with 3 weight percent aqueous HCl until the washing remains acidic, and twice with distilled water. The resin is then precipitated into 1500 ml of methanol in a Waring blender, washed with 500 ml of methanol, and allowed to air dry. The resin, found to have an intrinsic viscosity of 1.17, is solvent cast into a 2.8 mil thick film exhibiting a 11.9% haze and a Tg of 156° C.

EXAMPLE 2

A 1000 ml four neck flask is fitted with a mechanical stirrer, a pH probe, aqueous caustic inlet tube and a Claisen adapter to which is attached a dry ice condenser and a gas inlet tube. To the flask are added 300 ml water, 450 ml methylene chloride, 1.4 ml triethylamine (0.01 mole), 57 g (0.25 mole) bisphenol-A, 0.24 g (0.0016 mole) 4-tertiarybutyl phenol, and 2.15 g (0.0125 mole, 5 mole % based on bisphenol-A) of trans-cyclohexane-1,4-dicarboxylic acid (Aldrich). With stirring and while the pH is maintained at 5-7 by the addition of 25% aqueous sodium hydroxide, phosgene is introduced into the flask at the rate of 1 g/min for 5 minutes, then the pH is raised to 10 to 11 and the phosgene introduced for an additional 30 minutes (0.35 mole total phosgene) with the pH maintained at 10 to 11. The resin layer is separated from the brine layer, washed with 3 weight percent aqueous HCl until the washing remains acidic, and twice with distilled water. The resin is then precipitated into 1500 ml of methanol in a Waring blender and washed with 500 ml more methanol and allowed to air dry.

This resin having an I.V. of 1.18 and a Tg of 160 is then formed into a 2.8 mil thick film. The % haze of this film is 6.1%.

EXAMPLE 3

Repeating the procedures of Example 2, Supra., but increasing the proportion of cyclohexane-1,4-dicarboxylic acid to 4.3 g (0.025 mole, 10 mole %), and increasing the initial phosgenation period from 5 to 10 minutes, a resin is obtained having an I.V. of 1.17 and a Tg of 160° C. The cast film (2.8 mil thick)

exhibits a haze of 4.6%.

## Claims

1. A solvent cast film of a copolyester-carbonate resin containing recurring chain units of the formula:

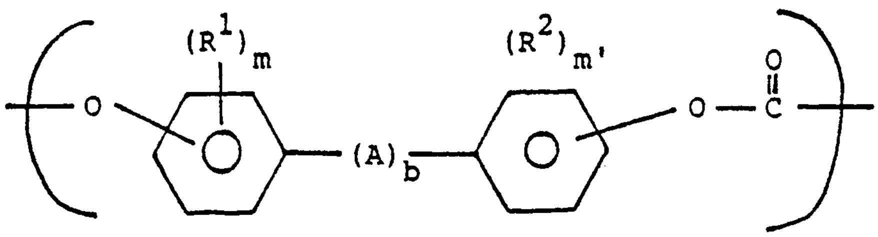

(I)

wherein $R^1$ and $R^2$ are independently selected from halogen, monovalent hydrocarbon, and monovalent hydrocarbonoxy radicals;

A is selected from the group consisting of divalent hydrocarbon radicals containing from 1 to about 15 carbon atoms; a halogen substituted divalent hydrocarbon radical containing from 1 to about 15 carbon atoms and divalent groups of the formulae:-

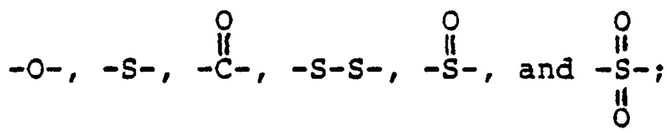

and

m and m′ are independently selected from positive integers having a value of from 0 to 4 inclusive; and b is either zero or one;
and recurring chain units of the formula:-

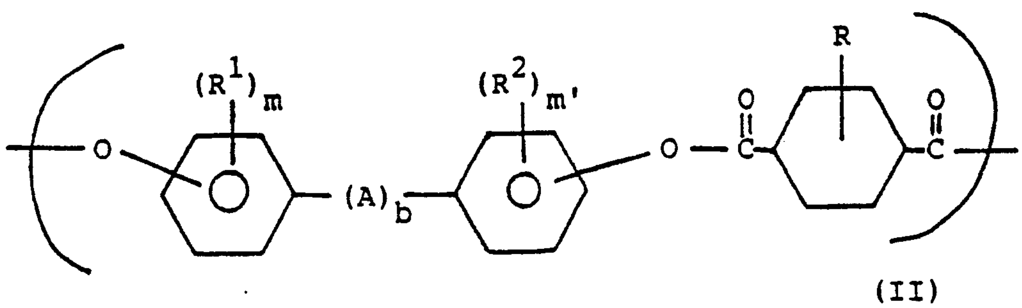

(II)

wherein R represents one of hydrogen and hydrocarbyl and wherein $R^1$, $R^2$, A, m, m′, and b are as defined hereinbefore; and
wherein units (II) are present in amounts of from about 1 to about 15 mole percent, based on the total amounts of units (I) and (II) present.

2. The film of Claim 1 wherein the resin is prepared by the polymerization reaction of bisphenol-A, phosgene, and cyclohexane-1,4-dicarboxylic acid.

3. A method of preparing a haze reduced thin film of a polycarbonate resin, which comprises; providing a copolyester-carbonate resin containing recurring chain units of the formula:

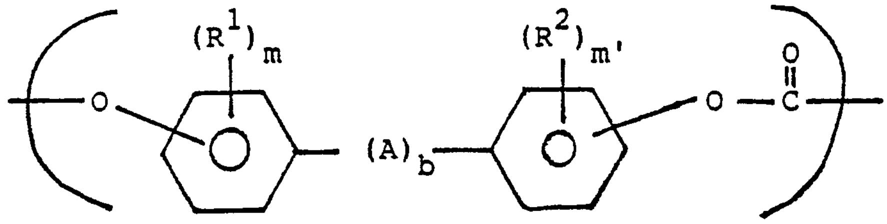

(I)

wherein $R^1$ and $R^2$ are independently selected from halogen, monovalent hydrocarbon, and monovalent hydrocarbonoxy radicals;

A is selected from the group consisting of divalent hydrocarbon radicals containing from 1 to about 15 carbon atoms; a halogen substituted divalent hydrocarbon radical containing from 1 to about 15 carbon atoms and divalent groups of the formulae:-

-O-, -S-, 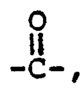, -S-S-, 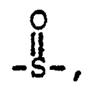, and 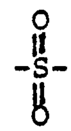;

m and m′ are independently selected from positive integers having a value of from 0 to 4 inclusive; and

b is either zero or one;

and recurring chain units of the formula:-

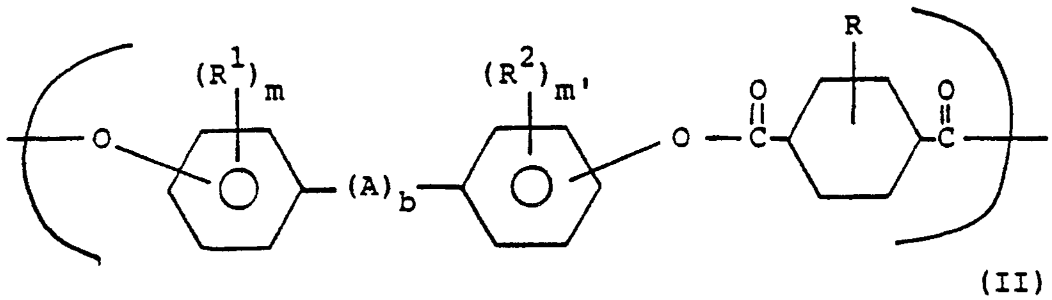

(II)

wherein R represents one of hydrogen and hydrocarbyl and wherein $R^1$, $R^2$, A, m, m′, and b are as defined hereinbefore; and

wherein units (II) are present in amounts of from about 1 to about 15 mole percent, based on the total amounts of units (I) and (II) present;

dissolving the provided resin in a solvent;

casting the dissolved resin on a surface; and

removing solvent, whereby a thin film of reduced haze is obtained.